# EUROPÄISCHE PATENTSCHRIFT

(11) **EP 1 634 904 B1**
(45) Veröffentlichungstag und Bekanntmachung des Hinweises auf die Patenterteilung: **06.06.2007**
(21) Anmeldenummer: 05018744.2
(22) Anmeldetag: 30.08.2005
(51) Int. Cl.: C08G 18/80, C09J 175/12

(54) **Blockierte Polyurethan-Prepolymere als Klebstoffe**
Blocked polyurethane prepolymers as adhesives
Polyurethanes bloquees comme adhesifs

(30) Priorität: 08.09.2004 DE 102004043342
(43) Veröffentlichungstag der Anmeldung: 15.03.2006
(73) Patentinhaber: Bayer MaterialScience AG, 51368 Leverkusen (DE)
(72) Erfinder: Wintermantel, Matthias, Dr., 51061 Köln (DE); Gürtler, Christoph, Dr., 50676 Köln (DE); Schelhaas, Michael, Dr., 50733 Köln (DE); Trinks, Rainer, Dr., 41539 Dormagen (DE); Meckel, Walter, Dr., 40627 Düsseldorf (DE)

(56) Entgegenhaltungen:
- EP-A- 0 419 928
- WO-A-20/04058849

## Beschreibung

Die Erfindung betrifft neue Reaktivsysteme auf Basis blockierter Polyurethan-Prepolymere, ein Verfahren zu deren Herstellung und deren Verwendung in Klebstoff-Zusammensetzungen.

Die Blockierung von Polyisocyanaten bzw. Polyurethan-Prepolymeren zum zeitweisen Schutz der Isocyanat-Gruppen ist eine bekannte Arbeitsmethode und wird z.B. in Houben Weyl, Methoden der organischen Chemie XIV/2, S. 61-70 beschrieben. Eine Übersicht prinzipiell geeigneter Blockierungsmittel findet sich z.B. bei Wicks et al. in Progress in Organic Coatings 1975, 3, S. 73-79, 1981, 9 S. 3-28 und 1999, 36, S. 148-172. Härtbare Zusammensetzungen, die blockierte Polyisocyanate bzw. Polyurethan-Prepolymere enthalten, finden beispielsweise in Polyurethan-(PUR)-Lacken oder Polyurethan-(PUR)-Klebstoffen Verwendung.

So beschreibt die DE-A 199 63 585 eine Schmelzklebstoff-Zusammensetzung, enthaltend ein Isocyanatgruppen aufweisendes Prepolymer, erhältlich durch Umsetzung von zumindest teilkristallinen, linearen Polyestern im Gemisch mit linearen Polyethern und gegebenenfalls amorphen Polyestern mit Diisocyanaten, wobei die reaktiven Isocyanatgruppen teilweise oder vollständig mit bekannten Blockierungsmitteln blockiert sind und Diaminen und/oder deren Epoxidaddukten als Vernetzerkomponente:

In der EP-A 0 419 928 werden lagerstabile, einkomponentige, bei Raumtemperatur wenigstens teilweise kristalline, überwiegend lineare, unter dem Einfluss von Hitze vernetzbare Polyurethanklebstoffe auf Basis von einem wenigstens teilweise kristallinen, mit aus der Polyurethanchemie bekannten monofunktionellen Blockierungsmitteln verkappte Isocyanatgruppen enthaltenden Polyurethanprepolymeren und mindestens einem niedermolekularen NH- und/oder OH-funktionellen Kettenverlängerungs- oder Vernetzungsmittel beschrieben.

Auch in der US-B 4 798 879 werden verkappte Isocyanate als Inhaltsstoffe eines Klebstoffsystems offenbart. Es wird dort ein bei Raumtemperatur schnell abbindendes Zweikomponentensystem beschrieben, bestehend aus einem verkappte Isocyanatgruppen enthaltenden Prepolymer und primären Aminen als Härter.

Das Blockierungsmittel erfüllt in diesen Klebstoff-Zusammensetzungen die folgenden Aufgaben: Zum einen verhindert es die vorzeitige Reaktion der damit blockierten NCO-Gruppen mit der NH- und/oder OH-Vernetzerkomponente, und zum anderen reguliert es durch seine spezifische Deblockierungseigenschaft die Aushärtung der Klebstoffe in einem bestimmten Temperaturbereich. Zusätzlich ergibt sich eine erhöhte Lagerstabilität der Klebstoff-Zusammensetzungen, da eine unerwünschte Nebenreaktion mit Spuren von Wasser, die bei der Herstellung oder der Lagerung in die Klebstoffe gelangen und zu einem Anstieg der Viskosität und schließlich zum Aushärten vor der Verarbeitung führen, verhindert wird.

Neben diesen gewünschten Eigenschaften, bringen die einzelnen Blockierungsmittel aber auch Nachteile mit, wie z.B. mangelhafte Wirtschaftlichkeit, Umweltprobleme und kritische physiologische Wirkungen.

Durch die Abspaltung des Blockierungsmittels werden flüchtige organische Verbindungen freigesetzt. Diese verbleiben in der Regel in der Klebschicht und wirken dort als Weichmacher und beeinflussen dadurch das anwendungstechnische Eigenschaftsprofil der Klebstoffformulierung in nachteiliger Weise. Außerdem handelt es sich bei der Abspaltung des Blockierungsmittels um eine Gleichgewichtsreaktion. Da das abgespaltene Blockierungsmittel in der Klebfuge verbleibt, verläuft die Deblockierung unvollständig, was zu einer unvollständigen Vernetzung des Klebstoffs führt. Auch hierdurch verschlechtert sich das anwendungstechnische Eigenschaftsprofil des Klebstoffs erheblich. Können die abgespaltenen Blockierungsmittel jedoch die Klebstoffschicht verlassen, so kann deren gasförmiges Entweichen zu einer Blasenbildung in der Klebstoffschicht und damit ebenfalls zu einer verminderten Festigkeit der Klebverbindung führen.

In der WO-A 03/004545 werden abspalterfrei blockierte organische Polyisocyanate und Polyisocyanatprepolymere offenbart, bei denen als Blockierungsmittel spezielle CH-azide cylclische Ketone verwendet werden. Die Vernetzung der blockierten Isocyanate erfolgt ohne Abspaltung, d.h. Freisetzung des Blockierungsmittels, mit Polyolen bei Temperaturen im Bereich von 110°C bis 140°C innerhalb von 15 bis 30 Minuten oder bei Temperaturen von 300°C bis 400°C innerhalb von 2 Minuten. Weiterhin wird erwähnt, dass die erfindungsgemäß blockierten Polyisocyanate auch mit Di- oder Polyaminen ausgehärtet werden können. Diese Reaktion soll bevorzugt bei Raumtemperatur durchgeführt werden. Die zuvor genannten Reaktionsbedingungen verhindern allerdings einen breiten Einsatz dieses Systems als Klebstoff, da eine Vielzahl von Substraten bei Temperaturen von 110 bis 130°C über eine Dauer von 15 bis 30 Minuten irreversibel geschädigt werden. Ausserdem sind diese Vernetzungsbedingungen auch aus ökonomischer Sicht (Energiekosten) vielfach ungeeignet.

Die DE-A 102 60 300 offenbart Pulverlackvernetzer auf der Basis von abspalterfrei blockierten Polyurethan-Vernetzern. Die Blockierung erfolgt ebenfalls mit speziellen CH-aziden cylclischen Ketonen. Die Aushärtung erfolgt mit bekannten Pulverlackhärtern bei Temperaturen zwischen 110°C und 220°C über einen Zeitraum von 1 bis 6 Minuten. Auch hier sind die Vemetzungsbedingungen aus den bereits genannten Gründen für den Einsatz als Klebstoff prohibitiv.

Die DE-A 102 60 299 beschreibt mit speziellen CH-aziden cylclischen Ketonen abspalterfrei blockierte Polyurethan-Prepolymere auf der Basis von Polyethern und daraus hergestellte raumtemperaturhärtende Reaktivsysteme und deren Verwendung zur Herstellung von Klebstoffen, Dichtungsmassen, Formteilen und Beschichtungen. Die Aushärtung der blockierten Prepolymere erfolgt mit Polyaminen mit einem Molekulargewicht zwischen 60 und 500 g/mol oder mit Polyetheraminen die beispielsweise von Huntsman unter dem Handelsnamen Jeffamin® vertrieben werden. Die Aushärtung dieser Systeme erfolgt bei Raumtemperatur innerhalb weniger Minuten bis Stunden. Es handelt sich um ein Zweikomponenten(2K)-System, das aufgrund der kurzen Aushärtungszeit nur eine sehr begrenzte Verarbeitungszeit (Topfzeit) aufweist. Dies kann, z.B. bei der Verklebung großflächiger Substrate, zu verarbeitungstechnischen Problemen führen.

Aufgabe der vorliegenden Erfindung bestand somit in der Bereitstellung eines Reaktivsystems auf Basis blockierter Polyurethan(PUR)-Prepolymerer als Klebstoffformulierungen, die emissionsfrei, d.h. ohne Abspaltung eines Blockierungsmittels, reagieren, bei Umgebungstemperatur lagerstabil sind, bei niedrigen Temperaturen vernetzen und gleichzeitig eine ausreichend lange Topfzeit bzw. Verarbeitungszeit aufweisen.

Es wurde gefunden, dass sich Reaktivsysteme auf Basis von PUR-Prepolymeren, die mit speziellen CH-aziden Verbindungen blockiert sind, sehr gut als Vernetzerkomponenten für thermisch aktivierbare Klebstoff-Zusammensetzungen eignen. Diese speziell blockierten PolyisocyanatPrepolymere lassen sich mit OH-funktionellen Reaktionspartnern, bei denen die OH-Komponente eine Aktivierung durch eine ß-ständige Aminkomponente erfährt, kombinieren und härten ohne Abspaltung volatiler Stoffe bei Raumtemperatur über mehrere Stunden bzw. bei Temperaturen zwischen 50°C und 90°C innerhalb von Minuten bis Stunden aus.

Gegenstand der vorliegenden Erfindung sind Reaktivsysteme enthaltend
A) ein oder mehrere blockierte Polyurethan-Prepolymere auf Basis von
   i) mindestens einem aromatischen, aliphatischen, araliphatischen und/oder cycloaliphatischen Diisocyanat mit einem Gehalt an freien NCO-Gruppen von 5 bis 60 Gew.-%,
   ii) einer Polyolkomponente, enthaltend mindestens ein Polyesterpolyol und/oder mindestens ein Polyetherpolyol und/oder mindestens ein Polycarbonatpolyol,
   iii) CH-aziden cyclischen Ketonen der allgemeinen Formel (I) als Blockierungsmittel, 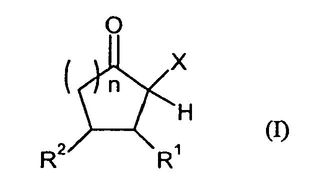
   in welcher
   - X: eine elektronenziehende Gruppe,
   - R¹ und R²: unabhängig voneinander die Reste H, C₁-C₂₀-(Cyclo)alkyl, C₆-C₂₄₋Aryl, C₁-C₂₀-(Cyclo)alkylester oder -amid, C₆-C₂₄-Arylester oder -amid, gemischt aliphatisch/aromatische Reste mit 1 bis 24 Kohlenstoffatomen, die auch Teil eines 4 bis 8-gliedrigen Ringes sein können, darstellen,
   - n: eine ganze Zahl von 0 bis 5 ist,
   wobei das Isocyanatgruppen-haltige PUR-Prepolymer einen Gehalt an blockierten Isocyanatgruppen (berechnet als NCO) von 0,1 bis 20 Gew.-% aufweist,
B) eine oder mehrere OH-funktionelle Verbindungen bei denen die OH-Komponente eine Aktivierung durch eine β-ständige Aminkomponente erfährt,
C) gegebenenfalls Katalysatoren und
D) gegebenenfalls weitere Additive.

Als Komponente i) geeignete Diisocyanate zur Herstellung der blockierten Polyurethan-Prepolymeren A) sind beispielsweise solche mit Isocyanatgehalten von 5 bis 60 Gew.-%, (bezogen auf das Diisocyanat) mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-iso-cyanato-prop-2-yl)-benzol (TMXDI), 2,4- und/oder 2,6-Diisocyanatotoluol (TDI), 2,2'-, 2,4'-und/oder 4,4'-Diisocyanatodiphenylmethan (MDI), 1,5-Diisocyanatonaphthalin oder 1,3- und 1,4-Bis-(isocyanatomethyl)-benzol.

Als Diiscocyanatkomponente i) bevorzugte Diisocyanate sind 1,6-Diisocyanatohexan (HDI), 1-Isocyanato-3,3,5-trimethyl-5-isocyanatomethylcyclohexan (Isophorondiisocyanat, IPDI), 4,4'-Diisocyanatodicyclohexylmethan, 2,4- und/oder 2,6-Diisocyanatotoluol (TDI), 2,2'-, 2,4'- und/oder 4,4'-Diisocyanatodiphenylmethan (MDI).

Geeignete Ausgangskomponenten i) sind auch durch Modifizierung dieser Diisocyanate hergestellte Polyisocyanate mit Uretdion-, Isocyanurat-, Iminooxadiazintrion-, Urethan-, Allophanat-, Acylhamstoff-, Biuret- und/oder Oxadiazintrionstruktur, wie sie beispielsweise in J. Prakt. Chem. 336 (1994) 185 - 200 oder DE-A 16 70 666, DE-A 19 54 093, DE-A 24 14 413, DE-A 24 52 532, DE-A 26 41 380, DE-A 37 00 209, DE-A 39 00 053, DE-A 39 28 503, EP-A 336 205, EP-A 339 396 und EP-A 798 299 beispielhaft beschrieben sind.

Als Komponenten ii) geeignete Polyole zur Herstellung der blockierten Polyurethan-Prepolymeren A) sind beispielsweise die aus der Polyurethan-Chemie dem Fachmann an sich bekannten Polyesterpolyole und/oder Polyetherpolyole und/oder Polycarbonatpolyole.

Als Polyolkomponente ii) sind beispielsweise Polyesterpolyole mit einem Molekulargewicht von etwa 200 bis etwa 10 000 g/mol, bevorzugt von etwa 1000 bis etwa 6000 g/mol geeignet. So können beispielsweise Polyesterpolyole verwendet werden, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind 1,4-Hydroxymethylcyclohexan, 2-Methyl-1,3-propandiol, Butantriol-1,2, 4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren und/oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Besonders geeignete Alkohole sind Hexandiol, Butandiol, Ethylenglykol, Diethylenglykol, Neopentylglykol, 3-Hydroxy-2,2-dimethylpropyl-3-hydroxy-2,2-dimethylpropanoat oder Trimethylolpropan oder Gemische aus zwei oder mehr davon. Besonders geeignete Säuren sind Phthalsäure, Isophthalsäure, Terephthalsäure, Adipinsäure oder Dodekandisäure oder deren Gemische.

Polyesterpolyole mit hohem Molekulargewicht umfassen beispielsweise die Umsetzungsprodukte von polyfunktionellen, bevorzugt difunktionellen Alkoholen (gegebenenfalls zusammen mit geringen Mengen an trifunktionellen Alkoholen) und polyfunktionellen, bevorzugt difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit bevorzugt 1 bis 3 C-Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Dodekandisäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Aus Lactonen, beispielsweise auf Basis von *ε*-Caprolacton, auch "Polycaprolactone" genannt, oder Hydroxycarbonsäuren, beispielsweise *ω*-Hydroxycapronsäure, erhältliche Polyester, können ebenfalls eingesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Die als Polyolkomponente ii) geeigneten Polyetherpolyole sind dem Fachmann aus der Polyurethanchemie an sich bekannt. Diese werden typischerweise ausgehend von niedermolekularen mehrfachfunktionellen OH- oder NH-funktionellen Verbindungen als Starter durch Umsetzung mit cyclischen Ethern oder Mischungen verschiedener cyclischer Ether erhalten. Als Katalysatoren werden dabei Basen wie KOH oder Doppelmetallcyanid-basierende Systeme verwendet. Hierzu geeignete Herstellungsverfahren sind Stand der Technik und beispielsweise in der US-B 6 486 361 oder L.E.St. Pierre, Polyethers Part I, Polyalkylene Oxide and other Polyethers, Editor: Norman G. Gaylord; High Polymers Vol. XIII; Interscience Publishers; Newark 1963; S. 130 ff. offenbart.

Geeignete Starter weisen bevorzugt 2 bis 8, besonders bevorzugt 2 bis 6 zur Polyaddition mit cyclischen Ethern befähigte Wasserstoffatome auf. Derartige Verbindungen sind beispielsweise Wasser, Ethylenglykol, 1,2- oder 1,3-Propylenglykol, 1,3-Butandiol, 1,4-Butandiol, 1,6-Hexandiol, Bisphenol-A, Neopentylglykol, Glycerin, Trimethylolpropan, Pentaerythrit oder Sorbit.

Als cyclische Ether kommen Alkylenoxide wie Ethylenoxid, Propylenoxid, Butylenoxid, Epichlorhydrin oder Styroloxid oder Tetrahydrofuran in Betracht.

Bevorzugt werden in Komponente ii) auf vorstehend genannten Startern basierende Polyether mit Propylenoxid-, Ethylenoxid- und/oder Tetrahydrofuran-Einheiten, besonders bevorzugt mit Propylenoxid- und/oder Ethylenoxid-Einheiten verwendet.

Die als Polyolkomponente ii) geeigneten Polyetherpolyole weisen Molekulargewichte zwischen etwa 200 und 20 000 g/mol, bevorzugt zwischen etwa 500 und 12 000 g/mol und besonders bevorzugt zwischen etwa 1000 und etwa 8000 g/mol auf.

Die als Polyolkomponente ii) geeigneten Polycarbonatpolyole, die im wesentlichen linear sind und über mindestens zwei, bevorzugt endständige OH-Gruppen verfügen, können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden.

Das Verhältnis der Komponenten i) und ii) zueinander wird so bemessen, dass ein molares Verhältnis von NCO-Gruppen zu OH-Gruppen von 1,2 bis 4,0, bevorzugt von 1,4 bis 3,0 resultiert.

Die Umsetzung der Komponenten i) und ii) bei der Herstellung der Polyurethanprepolymere A) erfolgt beispielsweise derart, dass die bei Reaktionstemperaturen flüssigen Polyole mit einem Überschuss der Polyisocyanate vermischt werden und die homogene Mischung bis zum Erhalt eines konstanten NCO-Wertes gerührt wird. Als Reaktionstemperatur werden 40°C bis 180°C, bevorzugt 50°C bis 140°C gewählt. Selbstverständlich kann die Herstellung der Polyurethan-prepolymere A) auch kontinuierlich in einer Rührkesselkaskade oder geeigneten Mischaggregaten, wie beispielsweise schnelldrehenden Mischern nach dem Rotor-Stator-Prinzip, erfolgen.

Es ist selbstverständlich möglich, die Polyester- und/oder Polyether- und/oder Polycarbonatpolyole oder einen Teil derselben mit einem Unterschuss an Diisocyanaten, bevorzugt 1,6-Diisocyanatohexan (HDI), 1-Isocyanato-3,3,5-trimethyl-5-isocyanatomethylcyclohexan (Isophorondiisocyanat, IPDI), 4,4'-Diisocyanatodicyclohexylmethan, 2,4- und/oder 2,6-Diisocyanatotoluol (TDI) und/oder 2,4'- und/oder 4,4'-Diisocyanatodiphenylmethan (MDI), zu modifizieren und nach beendeter Reaktion die urethangruppenhaltigen Polyole mit einem Überschuss von Diisocyanaten zu dem Polyurethanprepolymeren A) umzusetzen.

Gegebenenfalls können falls gewünscht bei der Umsetzung von i) mit ii) zu Polyurethan-Prepolymeren auch Katalysatoren zur Beschleunigung der NCO/OH-Reaktion und/oder Lösemittel zugesetzt werden.

Als Katalysatoren sind die aus der Polyurethanchemie an sich bekannten aminischen oder metallorganischen Verbindungen geeignet.

Als aminische Katalysatoren sind tertiäre Amine wie z.B. Triethylamin, Dimethylbenzylamin, N,N,N',N'-Tetramethyl-diamino-diethylether, 1,8-Diaza-bicyclo-5,4,0-undecen-7 (DBU) und N,N'-Dimorpholinodiethylether (DMDEE) und Alkanolaminverbindungen, wie z.B. Triethanolamin, Triisopropanolamin, N-Methyl- und N-Ethyl-diethanolamin, Dimethyl-aminoethanol geeignet.

Ebenso eignen sich z.B. die metallorganischen Verbindungen des Zinns, Bleis, Eisens, Titans, Wismuts oder Zirkoniums, wie z.B. Eisen(II)-chlorid, Zinkchlorid, Bleioctoat und vorzugsweise Zinnsalze, wie Zinndioctoat, Zinn-II-acetat, -ethylhexoat und -diethylhexoat, Dibutylzinndilaurat und/oder Dibutyldilaurylzinnmercaptid und Dialkyl-Zinn(IV)-Carboxylate. Auch Zinnoxide und - sulfide sowie -thiolate sind brauchbar. Konkrete Verbindungen sind z.B. Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat. Weiterhin haben sich als Katalysatoren Ti-Verbindungen, insbesondere Ti(IV)-O-Alkylverbindungen, mit Alkylgruppen wie Methyl, Ethyl, n-Propyl, Isopropyl, n-Butyl, Isobutyl, tert.-Butyl, n-Penty, 2-Pentyl, 3-Pentyl, bevorzugt Ethyl, n-Propyl, Isopropyl, n-Butyl, Isobutyl, tert.-Butyl und besonders bevorzugt Ti(IV)butylat, bewährt. Als Bismut-organische Verbindungen werden insbesondere Bismut-Carboxylate eingesetzt, wobei die Carbonsäuren 2 bis 20 C-Atome, bevorzugt 4 bis 14-Atome, besitzen.

Falls Katalysatoren eingesetzt werden, beträgt deren Menge bezogen auf die Gesamtmenge der umzusetzenden Komponenten i) und ii) 0,01 bis 8 Gew.-%, bevorzugt 0,1 bis 5 Gew.-%.

Ausgangsverbindungen iii) zur Herstellung der blockierten Polyurethan-Prepolymere A) sind CH-azide cyclische Ketone der allgemeinen Formel (I), 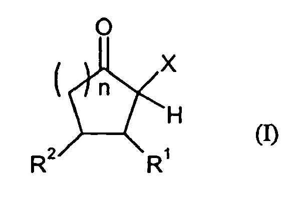 in welcher
- X: eine elektronenziehende Gruppe,
- R¹ und R²: unabhängig voneinander die Reste H, C₁-C₂₀-(Cyclo)alkyl, C₆-C₂₄-Aryl, C₁-C₂₀₋(Cyclo)alkylester oder -amid, C₆-C₂₄-Arylester oder -amid, gemischt aliphatisch/aromatische Reste mit 1 bis 24 Kohlenstoffatomen, die auch Teil eines 4 bis 8-gliedrigen Ringes sein können, darstellen,
und
- n: eine ganze Zahl von 0 bis 5 ist.

Bei der elektronenziehenden Gruppe X in Formel (I) kann es sich um alle Substituenten handeln, die zu einer CH-Azidität des α-ständigen Wasserstoffes führen. Dies können beispielsweise Estergruppen, Amidgruppen, Sulfoxidgruppen, Sulfongruppen, Nitrogruppen, Phosphonatgruppen, Nitrilgruppen, Isonitrilgruppen, Carbonylgruppen oder Polyhalogenalkylgruppen wie auch Halogene, insbesondere Fluor und Chlor, sein. Bevorzugt sind Nitril-und Estergruppen, besonders bevorzugt sind die Carbonsäuremethylester- und Carbonsäureethylestergruppe.

Geeignete Ausgangsverbindungen iii) sind auch Verbindungen ähnlich der allgemeinen Formel (I), deren Ring gegebenenfalls Heteroatome, wie Sauerstoff-, Schwefel-, oder Stickstoffatome enthalten. Sollte sich ein Heteroatom im Ring befinden, so ist das bevorzugte Strukturelement das eines Laktons oder Thiolaktons.

Bevorzugt weist das aktivierte cyclische Keton der Formel (I) eine Ringgröße von 5 (n = 1) oder 6 (n = 2) auf.

Bevorzugte Ausgangsverbindungen iii) sind Cyclopentanon-2-carboxymethylester und ―carboxyethylester, Cyclopentanon-2-carbonsäurenitril, Cyclohexanon-2-carboxymethylester und -carboxyethylester oder Cyclopentanon-2-carbonylmethyl. Besonders bevorzugt sind Cyclopentanon-2-carboxymethylester und -carboxyethylester sowie Cyclohexanon-2-carboxymethylester und ―arboxyethyl-ester. Die Cyclopentanonsysteme sind technisch leicht durch eine Dieckmann Kondensation von Adipinsäuredimethylester oder Adipinsäurediethylester erhältlich. Cyclohexanon-2-carboxymethylester kann durch Hydrierung von Salicylsäuremethylester hergestellt werden.

Die Blockierung der durch Umsetzung von i) und ii) hergestellten Polyurethan-Prepolymeren mit den cyclischen Ketonen iii) erfolgt im Allgemeinen in Gegenwart eines Katalysators, wobei pro Isocyanatgruppen-Äquivalent der zu blockierenden mit reaktiven Isocyanatgruppen terminierten Polyurethan-Prepolymeren 0,8 bis 1,2 mol des cyclischen Ketons iii) eingesetzt werden. Bevorzugt wird ein Isocyanatgruppen-Äquivalent der zu blockierenden Polyisocyanatkomponente mit 1 Äquivalent Blockierungsmittel zur Reaktion gebracht.

Als Katalysatoren zur Beschleunigung der Umsetzung sind Alkali- und Erdalkalimetallbasen, wie z.B. gepulvertes Natriumcarbonat (Soda) geeignet. Es können auch, je nach verwendetem cyclischen Keton iii), Trinatriumphosphat oder Aminbasen wie Dabco® (1,4-Diazabicyclo[2.2.2]octan) eingesetzt werden. Ebenfalls sind die Carbonate der Metalle der zweiten Nebengruppe geeignet. Bevorzugt wird Natriumcarbonat oder Kaliumcarbonat eingesetzt. Altemativ kann die Umsetzung des cyclischen Ketons iii) mit dem aus i) und ii) hergestellten NCO-gruppenhaltigen Polyurethan-Prepolymeren auch in Gegenwart von Zinksalzen als Katalysatoren durchgeführt werden. Besonders bevorzugt ist die Umsetzung mit Zink-2-ethylhexanoat. Es können auch Gemische von Katalysatoren verwendet werden.

Diese Katalysatoren werden im Allgemeinen in einer Menge von 0,01 bis 10 Gew.-%, bevorzugt 0,05 bis 3 Gew.-%, besonders bevorzugt 0,07 bis 1 Gew.-% , bezogen auf die eingesetzte Polyisocyanatkomponente, zugesetzt.

Die Umsetzung kann bei 0°C bis 140°C durchgeführt werden. Bevorzugt ist ein Temperaturbereich von 15°C bis 90°C.

Die Blockierung kann in Substanz oder aber in Gegenwart geeigneter Lösungsmittel erfolgen. Geeignete Lösungsmittel sind die üblichen Lacklösungsmittel, wie z.B. Butylacetat, Methoxypropylacetat, Methyl-Ethyl-Keton, Aceton, N-Methyl-2-pyrrolidon, Toluol, Xylol oder Solventnaphtha, wie es beispielsweise von der Fa. Exxon-Chemie als aromatenhaltiges Lösungsmittel angeboten wird (Solvesso 100® ), sowie Gemische der genannten Lösungsmittel.

Neben den erfindungsgemäß eingesetzten cyclischen Ketonen iii) können grundsätzlich auch andere aus der Polyurethanchemie bekannte Blockierungsmittel bei der Herstellung der blockierten Polyisocyanate mitverwendet werden, wobei der Anteil an Verbindungen der Formel (I) mindestens 30 Gew.-%, bevorzugt 50 Gew.-%, besonders bevorzugt 100 Gew.-% beträgt. Geeignete weiter Blockierungsmittel sind beispielsweise Diisopropylamin, Malonsäurediethylester, Acetessigester, Acetonoxim, Butanonoxim, ε-Caprolactam, 3,5-Dimethylpyrazol, 1,2,4-Triazol, Dimethyl-1,2,4-triazol, Imidazol oder beliebige Gemische dieser Blockierungsmittel.

Die auf diese Weise erhältlichen blockierten Polyurethan-Prepolymere A) weisen im Allgemeinen einem Gehalt an blockierten Isocyanatgruppen (berechnet als NCO) von 0,1 bis 20 Gew.-%, bevorzugt von 0,1 bis 15,6 Gew.-%, besonders bevorzugt von 0,1 bis 14 Gew.-% auf. Sie eignen sich in hervorragender Weise als Ausgangskomponenten zur Herstellung der erfindungsgemäßen Reaktivsysteme.

Bei den OH-funktionellen Verbindungen der Komponente B) handelt es sich um Polyole, deren OH-Gruppen eine Aktivierung durch ß-ständige Aminkomponenten erfahren. Solche gemischt funktionalen Reaktionspartner können z.B. Ethanolamin, Methylethanolamin, Dimethylethanolamin, Diethanolamin, Methyldiethanolamin oder auch mehrfach funktionale Aminoethanole sein. Ein bevorzugter gemischt funktionaler Reaktionspartner ist z.B. das N,N,N',N'-Tetrakis-(2-hydroxyethyl)-ethylendiamin oder N,N-Bis(2-hydroxyethyl)amin.

Zur Herstellung der erfindungsgemäßen Reaktivsysteme werden die blockierten Polyurethan-Prepolymere A) mit den genannten OH-funktionellen Reaktionspartnern B) in solchen Mengen kombiniert, dass auf jede blockierte und gegebenenfalls freie Isocyantgruppe 0,6 bis 1,4, bevorzugt 0,8 bis 1,2 und besonders bevorzugt 0,9 bis 1,1 gegenüber Isocyanaten reaktive Gruppen entfallen.

Die so erhaltene Reaktivsysteme können gegebenenfalls geeignete Katalysatoren C) enthalten, die eine Vernetzung bereits bei Raumtemperatur ermöglichen oder bei Zufuhr von Wärme beschleunigen.

Geeignete Katalysatoren C) sind beispielsweise DBTL (Dibutylzinndilaurat), Titan-2-ethylhexanoat, Titan-tetraisopropylat sowie andere gängige Titan-(IV)-Verbindungen, Zirkon-2-ethylhexanoat sowie andere gängige Zirkon-(IV)- Verbindungen, Aluminiumtriethylat, Scandiumtrifluormethansulfonat, Yttrium-2-ethylhexanoat, Yttriumtrifluormethansulfonat, Lanthan-2-ethylhexanoat, Lanthantrifluormethansulfonat, Kobalt-2-ethylhexanoat, Kupfer-2-ethylhexanoat, Indiumtrifluormethansulfonat, Galliumacetylacetonat, Nickelacetylacetonat, Lithium-2-ethylhexanoat, Lithiumtrifluormethansulfonat, Natrium-2-ethylhexanoat, Natriumacetat, Natriumtrifluormethansulfonat, Magnesium-2-ethylhexanoat, Magnesiumtrifluormethansulfonat, Calcium-2-ethylhexanoat, Calciumtrifluormethansulfonat, Zink-2-ethylhexanoat, Zinkdithiocarbamat, Zinkacetylacetonat, Zink-tetramethylheptadionat, Zink-salicylat, Zinkchlorid sowie andere gängige Zink-(II)-Verbindungen, Wismut-2-ethylhexanoat sowie Wismutacetat.

Bevorzugte Katalysatoren C) sind Zink- und Wismutverbindungen, besonders bevorzugt sind Zink-2-ethylhexanoat und Wismut-2-ethylhexanoat.

Diese Katalysatoren kommen im Allgemeinen in einer Menge von 0,00001 bis 2,0 bevorzugt von 0,05 bis 1,0 besonders bevorzugt von 0,01 bis 0,7 % bezogen auf die Reaktivsystem-Zusammensetzung, zum Einsatz.

Die Reaktivsysteme können neben den vorstehend genannten Komponenten zusätzlich noch aus der Klebstofftechnologie bekannte Additive D) als Formulierhilfsmittel enthalten. Solche Additive sind beispielsweise die üblichen Weichmacher, Füllstoffe, Pigmente, Trockenmittel, Lichtschutzmittel, Antioxidantien, Thixotropiermittel, Haftvermittler und gegebenenfalls weitere Hilfs- und Zusatzstoffe.

Als geeignete Füllstoffe seien beispielhaft Ruß, Fällungskieselsäuren, pyrogene Kieselsäuren, mineralische Kreiden und Fällungskreiden genannt.

Geeignete Weichmacher sind beispielsweise Phthalsäureester, Adipinsäureester, Alkylsulfonsäureester des Phenols oder Phosphorsäureester.

Als Thixotropiermittel seien beispielhaft pyrogene Kieselsäuren, Polyamide, hydrierte Rizinusöl-Folgeprodukte oder auch Polyvinylchlorid genannt.

Geeignete Trockenmittel sind insbesondere Alkoxysilylverbindungen, wie z.B. Vinyltrimethoxysilan, Methyltrimethoxysilan, i-Butyltrimethoxysilan, Hexadecyltrimethoxysilan, sowie anorganische Stoffe wie z.B. Calciumoxid (CaO) und Isocyanatgruppen tragende Verbindungen wie z.B. Tosylisocyanat.

Als Haftvermittler werden die bekannten funktionellen Silane eingesetzt, wie beispielsweise Aminosilane der vorstehend genannten Art, aber auch N-Aminoethyl-3-aminopropyl-trimethoxy und/oder N-Aminoethyl-3-aminopropyl-methyl-dimethoxysilan, Epoxysilane und/oder Mercaptosilane.

Die Herstellung der erfindungsgemäßen Reaktivsysteme aus A) und B) und gegebenfalls C) und/oder D) erfolgt bevorzugt bei Temperaturen von -20°C bis 50°C und besonders bevorzugt bei Temperaturen von 0°C bis 40°C.

Die erfindungsgemäßen Reaktivsysteme lassen sich zur Herstellung von Klebstoffen, Dichtstoffen, Beschichtungen, Vergussmassen oder Formteilen verwenden. Bevorzugt ist die Verwendung der erfindungsgemäßen Reaktivsysteme zur Herstellung von Klebstoffen.

Die erfindungsgemäßen Reaktivsysteme eignen sich zum Verkleben der verschiedensten Materialien, wie z. B. Metall, Kunststoff, Glas, Holz, Leder und textile Stoffe, miteinander bzw. untereinander.

Gegenstand der vorliegenden Erfindung ist auch ein Verfahren zur Herstellung von Verbundsystemen, dadurch gekennzeichnet, dass die zu verklebenden Fügeteile entweder einseitig oder beidseitig mit den erfindungsgemäßen Reaktivsysteme beschichtet werden.

Ebenfalls Gegenstand der vorliegenden Erfindung sind Verbundsysteme enthaltend die erfindungsgemäßen Reaktivsysteme als Beschichtungsmittel.

Je nach gewählter Zusammensetzung der erfindungsgemäßen Reaktivsysteme, härten diese bei Umgebungsbedingungen, d.h. bei Temperaturen von bevorzugt -30°C bis 50°C und einer relativen Feuchte von vorzugsweise 10 % bis 90 % innerhalb von Stunden bis zu einigen Tagen aus. Durch Erhöhung der Temperatur, d.h. oberhalb von 50°C, bevorzugt bei Temperaturen von ca. 60°C bis ca. 100°C und besonders bevorzugt bei Temperaturen von etwa 60°C bis etwa 80°C, kann die Aushärtung zusätzlich beschleunigt werden, was in der Praxis gewünscht sein kann. Dann härten die erfindungsgemäßen Reaktivsysteme je nach gewählter Zusammensetzung innerhalb von wenigen Minuten bis zu einigen Stunden aus.

Die Erfindung wird durch die nachfolgenden Beispiele erläutert.

### Beispiele

In den nachfolgenden Beispielen beziehen sich die Prozentangaben auf das Gewicht.

Die Viskositäten wurden bei einer Messtemperatur von 23°C mit Hilfe des Rotationsviskosimeters Viskotester VT 550 der Fa. Thermo Haake, Karlsruhe, DE mit dem Messbecher SV und der Messeinrichtung SV DIN 2 bestimmt.

Die Bestimmung des NCO-Gehalts der Prepolymere bzw. Reaktionsmischungen erfolgte nach DIN EN 1242.

### Ausgangsverbindungen

Cyclopentanon-2-carboxyethylester wurde von der Firma Fluka bezogen.

N,N,N',N'-Tetrakis-(2-hydroxyethyl)-ethylendiamin wurde von der Firma Fluka bezogen und ohne weitere Reinigung eingesetzt.

### Herstellung der mit α-aciden cyclischen Ketonen blockierten Polyurethan-Prepolymeren

### Blockiertes Polyurethan-Prepolymer A:

In einem 250 ml Vierhalskolben mit Rückflusskühler und Innenthermometer werden in einer Stickstoffatmosphäre 100,8 g (0,30 val) eines NCO-Prepolymers aus HDI und einem Polyetherdiol (Desmodur® E 305; Bayer MaterialScience AG, Leverkusen, NCO-Gehalt 12,5 %, Äquivalentgewicht 336 g/val) sowie 0,095 g Zink-2-ethylhexanoat vorgelegt. Bei Raumtemperatur werden nun langsam 47,8 g (0,306 val) Cyclopentanon-2-carboxyethylester hinzugetropft, so dass die Reaktionstemperatur nicht über 40°C steigt. Gegebenenfalls muss mit einem Wasserbad gekühlt werden. Nach Ende der Esterzugabe wird bei 40°C so lange weiter gerührt, bis der NCO-Wert der Reaktion Null erreicht. Der blockierte NCO-Wert beträgt 8,52%.

### Blockiertes Polyurethan-Prepolymer B:

In einem 250 ml Vierhalskolben mit Rückflusskühler und Innenthermometer werden in einer Stickstoffatmosphäre 146,2 g (0,15 val) eines NCO-Prepolymers aus Diisocyanatotoluol (TDI) und einem Polyetherdiol (Desmodur® E 15, Bayer MaterialScience AG, Leverkusen, NCO-Gehalt 4,3 %, Äquivalentgewicht 974,5 g/val) sowie 0,170 g Zink-2-ethylhexanoat vorgelegt. Bei Raumtemperatur werden nun langsam 23,4 g (0,15 val) Cyclopentapon-2-carboxyethylester hinzugetropft, so dass die Reaktionstemperatur nicht über 40°C steigt. Gegebenfalls mit Wasserbad kühlen. Nach Ende der Esterzugabe wird bei 40°C so lange weiter gerührt bis der NCO-Wert der Reaktion Null erreicht. Der blockierte NCO-Gehalt des Präpolymers beträgt 3,71 %, die Viskosität beträgt 48.900 mPas.

### Blockiertes Polyurethan-Prepolymer C:

In einem 500 ml Dreihalskolben werden 1,2 val 2,6-Diisocyanatotoluol (TDI) und 348,1 g Aceton bei einer Temperatur von 50°C vorgelegt. Anschließend werden 150 g eines Polyesterdiols (Baycoll® AD 1225; Bayer MaterialScience AG, Leverkusen, Hydroxylzahl 225 mg KOH/g Substanz, entspricht einem Hydroxylgehalt von 6,52 bis 7,12 %) hinzugegeben. Die Temperatur sollte bei nicht über 60°C steigen. Man lässt solange reagieren, bis der Urethan-NCO-Wert erreicht ist (4,18%). Danach wird auf 45°C abgekühlt. Es werden 93,7 g (0,6 val) Cyclopentanon-2-carboxyethylester und 348 mg Zink-2-ethylhexanoat hinzugegeben. Man lässt bei 45 bis 50°C reagieren, bis ein NCO-Wert von 0 erreicht ist. Danach wird das Aceton abdestilliert. Das entstandene Produkt hat einen blockierten NCO-Wert von 14,5 %. Die Substanz ist fest.

### Blockiertes Polyurethan-Prepolymer D:

In einem 2000 ml Vierhalskolben mit Rührwerk, Rückflusskühler und Innenthermometer werden in einer Stickstoffatmosphäre 193,93 g (2,23 val) 2,6-Diisocyanatotoluol (TDI) bei einer Temperatur von 60°C vorgelegt. Anschließend werden über einen Tropftrichter 1114,56 g (1,11 val) eines Polypropylenglykols (Acclaim® 2200, Bayer MaterialScience AG, Leverkusen, DE, Hydroxylzahl von ca. 56 mg KOH/g, nominelle Funktionalität von 2) langsam zugegeben. Dabei soll die Temperatur nicht über 60°C steigen. Nach der vollständigen Zugabe des Polyethers wird bei 60°C so lange weitergerührt, bis der NCO-Gehalt der Urethanstufe von 3,58 % erreicht ist. Man lässt auf 50°C abkühlen und rührt eine Menge von 1,5 g Zink-2-ethylhexanaoat ein. Daraufhin werden 191,5 g (1,23 val) Cyclopentanon-2-carboxyethylester über einen Zeitraum von 30 Minuten hinzugetropft. Man lässt solange reagieren, bis ein NCO-Wert von 0 % erreicht ist (ca. 10 Stunden). Danach wird der Ansatz auf Raumtemperatur abgekühlt und das Produkt abgefüllt. Der blockierte NCO-Gehalt des Prepolymers beträgt 3,12 %.

### Blockiertes Polyurethan-Prepolymer E:

In einem 2000 ml Vierhalskolben mit Rührwerk, Rückflusskühler und Innenthermometer werden in einer Stickstoffatmosphäre 111,26 g (1,28 val) 2,6-Diisocyanatotoluol (TDI) bei einer Temperatur von 60°C vorgelegt. Anschließend werden über einen Tropftrichter 1278,87 g (0,64 val) eines Polypropylenglykols (Acclaim® 4200, Bayer MaterialScience AG, Leverkusen, DE, Hydroxylzahl von ca. 28 mg KOH/g, nominelle Funktionalität von 2) langsam zugegeben. Dabei soll die Temperatur nicht über 60°C steigen. Nach der vollständigen Zugabe des Polyethers wird bei 60°C so lange weitergerührt, bis der NCO-Gehalt der Urethanstufe von 1,93 % erreicht ist. Man lässt auf 50°C abkühlen und rührt eine Menge von 0,5 g Zink-2-ethylhexanaoat ein. Daraufhin werden 109,87 g (0,7 val) Cyclopentanon-2-carboxyethylester über einen Zeitraum von 30 Minuten hinzugetropft. Man lässt solange reagieren, bis ein NCO-Wert von 0 % erreicht ist (ca. 10 Stunden). Danach wird der Ansatz auf Raumtemperatur abgekühlt und das Produkt abgefüllt. Der blockierte NCO-Gehalt des Prepolymers beträgt 1,79 %.

### Anwendungstechnischer Teil:

### Beispiel 1:

Die in der Tabelle 1 angegebene Menge des entsprechenden blockierten Polyurethan-Prepolymeren (Komponente A)) wurde mit der in der Tabelle angegebenen Menge an N,N,N',N'-Tetrakis-(2-hydroxyethyl)-ethylendiamin (Komponente B)), entsprechend einem Verhältnis an blockierten NCO-Gruppen zu OH-Gruppen von 1:1 intensiv vermischt. Die Mischung wurde anschließend in eine Teflonschale (Durchmesser: 8 cm, Tiefe: 1 cm) gefüllt und bei Raumtemperatur aushärten gelassen. Die gemessenen Zeiten bis zur vollständigen Aushärtung sind in der Tabelle 1 angegeben.

### Vergleichsbeispiel 1:

Die in der Tabelle 2 angegebene Menge des entsprechenden blockierten Polyurethan-Prepolymeren (Komponente A)) wurde mit der in der Tabelle angegebenen Menge an Polyamin als Vernetzer, entsprechend einem Verhältnis an blockierten NCO-Gruppen zu NH-Gruppen von 1:1 intensiv vermischt. Die Mischung wurde anschließend in eine Teflonschale (Durchmesser: 8 cm, Tiefe: 1 mm) gefüllt und bei Raumtemperatur aushärten gelassen. Die gemessenen Zeiten bis zur vollständigen Aushärtung sind in der Tabelle 2 angegeben.

### Beispiel 2:

Die in der Tabelle 3 angegebene Menge des entsprechenden blockierten Polyurethan-Prepolymeren (Komponente A)) wurde mit der in der Tabelle angegebenen Menge an N,N,N',N'-Tetrakis-(2-hydroxyethyl)-ethylendiamin (Komponente B)), entsprechend einem Verhältnis an blockierten NCO-Gruppen zu OH-Gruppen von 1:1 intensiv vermischt. Die Mischung wurde anschließend auf einer Koflerbank gegeben und die Zeit bis zur vollständigen Aushärtung bei erhöhten Temperaturen bestimmt. Die gemessenen Zeiten bis zur vollständigen Aushärtung sind in der Tabelle 3 angegeben.

### Beispiel 3:

15 g des blockierten Polyisocyanatprepolymers A werden mit 1,797 g N,N,N',N'-Tetrakis-(2-hydroxyethyl)-ethylendiamin als Reaktionspartner, entsprechend einem Verhältnis von blockierten Isocyanatgruppen zu OH-Gruppen von 1:1, und 0,15 g Zink-2-ethylhexanoat als Katalysator eingewogen und durch intensives Rühren vermischt. Mit dieser Klebstoff-Zusammensetzung werden Buchenholzplatten (Größe 30 x 120 x 4,0 mm, bei 23°C und 50 % rel. Feuchte gelagert) mit Hart-PVC-Folie (Fa. Benecke-Kaliko, Benelitfolie RTF Abmessungen 30 x 210 x 0,4 mm) verklebt. Der Klebstoffauftrag erfolgt dabei einseitig auf dem Buchenholz mit Hilfe eines Rillenrakels (150 µm). Die Klebfläche beträgt ca. 30 x 90 mm. Die verklebten Substrate werden mit einem Gewicht von 2 kg beschwert und 3 Tage zur Aushärtung liegen gelassen. Danach wird die Schälfestigkeit unter einem Abzugswinkel von 180° bei einer Abzugsgeschwindigkeit von 100 mm/min bestimmt. Es werden 5 Einzelmessungen durchgeführt und anschließend gemittelt. Die Schälfestigkeit beträgt 3,7 N/mm.

### Beispiel 4:

15 g des blockierten Polyurethan-Prepolymers C werden mit 1,526 g N,N,N',N'-Tetrakis-(2-hydroxyethyl)-ethylendiamin als Reaktionspartner, entsprechend einem Verhältnis von blockierten Isocyanatgruppen zu OH-Gruppen von 1:1, und 0,15 g Zink-2-ethylhexanoat als Katalysator eingewogen und durch intensives Rühren vermischt. Mit dieser Klebstoff-Zusammensetzung werden Buchenholzplatten (Größe 30 x 120 x 4,0 mm, bei 23°C und 50 % rel. Feuchte gelagert) mit Hart-PVC-Folie (Fa. Benecke-Kaliko, Benelitfolie RTF Abmessungen 30 x 210 x 0,4 mm) verklebt. Der Klebstoffauftrag erfolgt dabei einseitig auf dem Buchenholz mit Hilfe eines Rillenrakels (150 µm). Die Klebfläche beträgt ca. 30 x 90 mm. Die verklebten Substrate werden mit einem Gewicht von 2 kg beschwert und 3 Tage zur Aushärtung liegen gelassen. Danach wird die Schälfestigkeit unter einem Abzugswinkel von 180° bei einer Abzugsgeschwindigkeit von 100 mm/min bestimmt. Es werden 5 Einzelmessungen durchgeführt und anschließend gemittelt. Bei 2 Prüfkörpern trat Substratbruch auf (Abreißen der PVC-Folie). Aus den drei übrigen Einzelmessungen wurde ein Mittelwert der Schälfestigkeit von 4,5 N/mm ermittelt.

### Beispiel 5:

15 g des blockierten Polyurethan-Prepolymers A werden mit 1,797 g N,N,N',N'-Tetrakis-(2-hydroxyethyl)-ethylendiamin als Reaktionspartner, entsprechend einem Verhältnis von blockierten Isocyanatgruppen zu OH-Gruppen von 1:1, und 0,15 g Zink-2-ethylhexanoat als Katalysator eingewogen und durch intensives Rühren vermischt. Mit dieser Klebstoff-Zusammensetzung werden NBR-Prüfkörper (30x180 mm) miteinander verklebt. Der Klebstoffauftrag erfolgt dabei einseitig mit Hilfe eines Rillenrakels (150 µm). Die Verklebten Substrate werden mit einem Gewicht von 4 kg beschwert und 3 Tage zur Aushärtung liegen gelassen. Danach wird die Schälfestigkeit unter einem Abzugswinkel von 180° bei einer Abzugsgeschwindigkeit von 100 mm/min bestimmt. Es werden 3 Einzelmessungen durchgeführt und anschließend gemittelt. Die Schälfestigkeit beträgt 3,6 N/mm.

**Tabelle 1: Aushärtungszeit erfindungsgemäßer Reaktivsysteme bei Raumtemperatur (ca. 25°C)**

| Komponente A) | Menge [g] | Komponente B) | Menge [g] | Aushärtezeit [min] |
|---|---|---|---|---|
| Blockiertes Polyurethan-Prepolymer A | 15 | N,N,N',N'-Tetrakis-(2-hydroxyethyl)-ethylendiamin | 1,797 | 1440 |
| Blockiertes Polyurethan-Prepolymer B | 15 | N,N,N',N'-Tetrakis-(2-hydroxyethyl)-ethylendiamin | 0,799 | 1440 |
| Blockiertes Polyurethan-Prepolymer D | 15 | N,N,N',N'-Tetrakis-(2-hydroxyethyl)-ethylendiamin | 0,632 | 2880 |
| Blockiertes Polyurethan-Prepolymer E | 15 | N,N,N',N'-Tetrakis-(2-hydroxyethyl)-ethylendiamin | 0,348 | 2880 |

**Tabelle 2: Aushärtungszeit der Vergleichsbeispiele bei Raumtemperatur (ca. 25°C)**

| Komponente A) | Menge [g] | Polyamin | Menge [g] | Aushärtezeit [min] |
|---|---|---|---|---|
| Blockiertes Polyurethan-Prepolymer D | 15 | 4,4'-Diaminodicyclohexyl-methan (PACM 20) | 1,13 | 75 |
| Blockiertes Polyurethan-Prepolymer E | 15 | 4,4'-Diaminodicyclohexyl-methan (PACM 20) | 0,68 | 90 |
| Blockiertes Polyurethan-Prepolymer D | 15 | 4,4'-Diamino-3,3' -dimethyl-dicyclohexylmethan (Laromin C260) | 1,28 | 195 |
| Blockiertes Polyurethan-Prepolymer E | 15 | 4,4' -Diamino-3,3' -dimethyl-dicyclohexylmethan (Laromin C260) | 0,77 | 135 |

**Tabelle 3: Aushärtungszeit erfindungsgemäßer Reaktivsysteme bei erhöhten Temperaturen**

| Komponente A) | Menge [g] | Komponente B) | Menge [g] | Temperatur [°C] | Aushärtezeit [min] |
|---|---|---|---|---|---|
| Blockiertes Polyurethan-Prepolymer A | 10 | N,N,N',N'-Tetrakis-(2-hydroxyethyl)-ethylendiamin | 1,2 | 80 | 251 |
| | | | | 100 | 96 |
| Blockiertes Polyurethan-Prepolymer B | 10 | N,N,N',N'-Tetrakis-(2-hydroxyethyl)-ethylendiamin | 0,53 | 60 | 220 |
| | | | | 80 | 85 |
| | | | | 100 | 33 |

## Patentansprüche

1. Reaktivsysteme enthaltend
A) ein oder mehrere blockierte Polyurethan-Prepolymere auf Basis von
(i) mindestens einem aromatischen, aliphatischen, araliphatischen und/oder cycloaliphatischen Diisocyanat mit einem Gehalt an freien NCO-Gruppen von 5 bis 60 Gew.-%
(ii) einer Polyolkomponente, enthaltend mindestens ein Polyesterpolyol und/oder mindestens ein Polyetherpolyol und/oder mindestens ein Polycarbonatpolyol,
(iii) CH-aziden cyclischen Ketonen der allgemeinen Formel (I) als Blockierungsmittel, 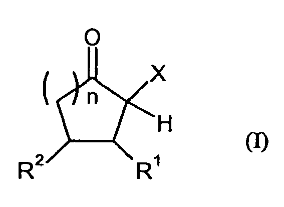 in welcher
X eine elektronenziehende Gruppe,
R¹ und R² unabhängig voneinander die Reste H, C₁-C₂₀-(Cyclo)alkyl, C₆-C₂₄-Aryl, C₁-C₂₀-(Cyclo)alkylester oder -amid, C₆-C₂₄-Arylester oder -amid, gemischt aliphatisch/aromatische Reste mit 1 bis 24 Kohlenstoffatomen, die auch Teil eines 4 bis 8-gliedrigen Ringes sein können, darstellen,
n eine ganze Zahl von 0 bis 5 ist,
wobei das Isocyanatgruppen-haltige PUR-Prepolymer einen Gehalt an blockierten Isocyanatgruppen (berechnet als NCO) von 0,1 bis 20 Gew.-% aufweist,
B) eine oder mehrere OH-funktionelle Verbindungen bei denen die OH- Komponente eine Aktivierung durch eine β-ständige Aminkomponente erfährt
C) gegebenenfalls Katalysatoren und
D) gegebenenfalls weitere Additive.

2. Reaktivsystem gemäß Anspruch 1, **dadurch gekennzeichnet, dass** Komponente (i) 6-Diisocyanatohexan (HDI), 1-Isocyanato-3,3,5-trimethyl-5-isocyanatomethylcyclohexan (Isophorondiisocyanat, IPDI), 4,4'-Diisocyanatodicyclohexylmethan, 2,4- und/oder 2,6-Diisocyanatotoluol (TDI), 2,2'-, 2,4'- und/oder 4,4'-Diisocyanatodiphenylmethan (MDI) ist.

3. Reaktivsystem gemäß Anspruch 1, **dadurch gekennzeichnet, dass** Komponente (iii) ausgewählt aus der Gruppe Cyclopentanon-2-carboxymethylester und -carboxyethylester, Cyclopentanon-2-carbonsäurenitril, Cyclohexanon-2-carboxymethylester und -carboxyethylester oder Cyclopentanon-2-carbonylmethyl ist.

4. Reaktivsystem gemäß Anspruch 1, **dadurch gekennzeichnet, dass** das Polyurethan-Prepolymer A) einen Gehalt an blockierten Isocyanatgruppen von 0,1 bis 15,6 Gew.-% aufweist.

5. Reaktivsystem gemäß Anspruch 1, **dadurch gekennzeichnet, dass** die Komponente B) ausgewählt ist aus der Gruppe Ethanolamin, Methylethanolamin, Dimethylethanolamin, Diethanolamin, Methyldiethanolamin und mehrfach funktionelle Aminoethanole.

6. Reaktivsystem gemäß Anspruch 5 **dadurch gekennzeichnet, dass** in Komponente B) als mehrfach funktionelle Aminoalkohole N,N,N',N'-Tetrakis-(2-hydroxyethyl)-ethylendiamin und/oder N,N-Bis(2-hydroxyethyl)amin eingesetzt werden.

7. Verfahren zur Herstellung der Reaktivsysteme gemäß Anspruch 1, **dadurch gekennzeichnet, dass** die blockierten Polyurethan-Prepolymere A) mit den genannten OH-funktionellen Reaktionspartnern B) in solchen Mengen kombiniert werden, dass auf jede blockierte und gegebenenfalls freie Isocyantgruppe 0,6 bis 1,4 gegenüber Isocyanaten reaktive Gruppen entfallen.

8. Verwendung der Reaktivsysteme gemäß Anspruch 1 zur Herstellung von Klebstoffen.

9. Verfahren zur Herstellung von Verbundsystemen, **dadurch gekennzeichnet, dass** die zu verklebenden Fügeteile entweder einseitig oder beidseitig mit den Reaktivsystemen gemäß Anspruch 1 beschichtet werden.

10. Verfahren gemäß Anspruch 9, **dadurch gekennzeichnet, dass** die Fügeteile aus Metall, Kunststoff, Glas, Holz, Leder oder textilen Stoffen bestehen.

11. Verbundsysteme erhältlich unter Verwendung von Reaktivsystemen gemäß Anspruch 1.

## Claims

1. Reactive systems comprising
A) one or more blocked polyurethane prepolymers based on
(i) at least one aromatic, aliphatic, araliphatic and/or cycloaliphatic diisocyanate having a content of free NCO groups of 5 to 60 wt. %,
(ii) a polyol component comprising at least one polyester polyol and/or at least one polyether polyol and/or at least one polycarbonate polyol,
(iii) CH-acidic cyclic ketones of the general formula (I) as blocking agents, 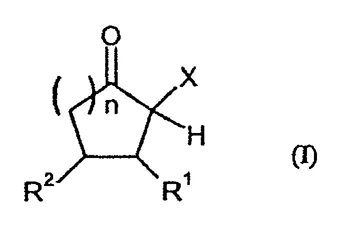 wherein
X represents an electron-attracting group,
R¹ and R² independently of one another represent the radicals H, C₁-C₂₀ (cyclo) alkyl, C₆-C₂₄ aryl, C₁-C₂₀ (cyclo)alkyl ester or amide, C₆-C₂₄ aryl ester or amide, mixed aliphatic/aromatic radicals having 1 to 24 carbon atoms that can also be part of a 4- to 8-membered ring, and
n is an integer from 0 to 5,
the isocyanate-group-containing PU prepolymer having a content of blocked isocyanate groups (calculated as NCO) of from 0.1 to 20 wt. %,
B) one or more OH-functional compounds in which the OH component undergoes activation by a β-position amine component,
C) optionally catalysts, and
D) optionally further additives.

2. Reactive system according to Claim 1, **characterized in that** component (i) is 6-diisocyanatohexane (HDI), 1-isocyanato-3,3,5-trimethyl-5-isocyanatomethylcyclohexane (isophorone diisocyanate, IPDI), 4,4'-diisocyanatodicyclohexylmethane, 2,4- and/or 2,6-diisocyanatotoluene (TDI), 2,2'-, 2,4'- and/or 4,4'-diisocyanatodiphenylmethane (MDI).

3. Reactive system according to Claim 1, **characterized in that** component (iii) is selected from the group cyclopentanone-2-carboxymethyl ester and cyclopentanone-2-carboxyethyl ester, cyclopentanone-2-carboxylic acid nitrile, cyclohexanone-2-carboxymethyl ester and cyclohexanone-2-carboxyethyl ester or cyclopentanone-2-carbonylmethyl.

4. Reactive system according to Claim 1, **characterized in that** the polyurethane prepolymer A) has a content of blocked isocyanate groups of 0.1 to 15.6 wt. %.

5. Reactive system according to Claim 1, **characterized in that** component B) is selected from the group ethanolamine, methylethanolamine, dimethylethanolamine, diethanolamine, methyldiethanolamine and polyfunctional aminoethanols.

6. Reactive system according to Claim 5, **characterized in that** in component B) N,N,N',N'-tetrakis(2-hydroxyethyl)ethylenediamine and/or N,N-bis(2-hydroxyethyl)amine are used as polyfunctional amino alcohols.

7. Process for the production of the reactive systems according to Claim 1, **characterized in that** the blocked polyurethane prepolymers A) are combined with the stated OH-functional co-reactants B) in amounts such that there are 0.6 to 1.4 isocyanate-reactive groups for every blocked and optionally free isocyanate group.

8. Use of the reactive systems according to Claim 1 for the production of adhesives.

9. Process for the production of composite systems, **characterized in that** the adherends to be bonded are coated either on one side or on both sides with the reactive systems according to Claim 1.

10. Process according to Claim 9, **characterized in that** the adherends are of metal, plastic, glass, wood, leather or textiles.

11. Composite systems obtainable using reactive systems according to Claim 1.

## Revendications

1. Systèmes réactifs contenant
A) un ou plusieurs prépolymères de polyuréthanne bloqué, à base de
(i) au moins un diisocyanate aromatique, aliphatique, araliphatique et/ou cycloaliphatique, avec une teneur en groupes NCO libres allant de 5 à 60% en poids,
(ii) un composant polyol, contenant au moins un polyester-polyol et/ou au moins un polyéther-polyol et/ou au moins un polycarbonate-polyol,
(iii) des cétones cycliques CH-acides de la formule générale (I) comme agent de blocage : 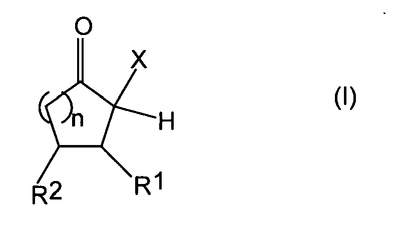 dans laquelle
X représente un groupe électrocapteur,
R¹ et R² représentent indépendamment l'un de l'autre, les restes H, (cyclo)alcoyle en C₁-C₂₀, aryle en C₆-C₂₄, ester ou amide de (cyclo)alcoyle en C₁-C₂₀, ester ou amide de aryle en C₆-C₂₄, des restes aliphatiques/aromatiques mixtes avec 1 à 24 atomes de carbone, qui peuvent être également, une partie d'un cycle ayant 4 à 8 membres,
n représente un nombre entier allant de 0 à 5,
où le prépolymère PUR contenant des groupes isocyanate présente une teneur en groupes isocyanate bloqués (calculés comme NCO) allant de 0,1 à 20% en poids,
(B) un ou plusieurs composés à fonction OH, dans lequels le composant OH subit une activation par un composant amine en β,
(C) le cas échant, des catalyseurs, et
(D) le cas échéant, d'autres additifs.

2. Systèmes réactifs selon la revendication 1, **caractérisés en ce que** le composant (i) est le 6-diisocyanatohexane (HDI), le 1-isocyanato-3,3,5-triméthyl-5-isocyanatométhylcyclohexane (isophoronediisocyanate, IPDI), le 4,4'-diisocyanatodicyclohexylméthane, le 2,4- et/ou le 2,6-diisocyanatotoluène (TDI), le 2,2'-, le 2,4'- et/ou le 4,4'-diisocyanatodiphényl-méthane (MDI).

3. Systèmes réactifs selon la revendication 1, **caractérisés en ce que** le composant (iii) est choisi parmi le groupe de l'ester méthylique et l'ester éthylique de l'acide cyclopentanone-2-carboxylique, le cyclopentanone-2-carbonitrile, l'ester méthylique et l'ester éthylique de l'acide cyclohexanone-2-carboxylique ou le cylopentanone-2-carbonylméthyle.

4. Systèmes réactifs selon la revendication 1, **caractérisés en ce que** le prépolymère de polyuréthanne (A) présente une teneur en groupes isocyanate bloqués allant de 0,1 à 15,6% en poids.

5. Systèmes réactifs selon la revendication 1, **caractérisés en ce que** le composant (B) est choisi parmi le groupe de l'éthanolamine, la méthyléthanolamine, la diméthyléthanolamine, la diéthanolamine, la méthyldiéthanolamine et des aminoéthanols polyfonctionnels.

6. Systèmes réactifs selon la revendication 5, **caractérisés en ce que** dans le composant (B), on met en oeuvre comme aminoalcools polyfonctionnels, la N,N,N',N'-tétrakis(2-hydroxyéthyl)éthylènediamine et/ou la N,N-bis(2-hydroxyéthyl)amine.

7. Procédé de préparation de systèmes réactifs selon la revendication 1, **caractérisé en ce que** les prépolymères de polyuréthanne bloqué (A) sont combinés aux partenaires de réaction (B) à fonction OH, cités, en des quantités telles que pour chaque groupe isocyanate bloqué et le cas échéant, libre, il y a 0,6 à 1,4 groupe réagissant avec les isocyanates.

8. Utilisation des systèmes réactifs selon la revendication 1, pour la préparation de colles.

9. Procédé de préparation de systèmes composites, **caractérisé en ce que** les pièces à coller sont revêtues, sur une face ou sur les deux faces, avec les systèmes réactifs selon la revendication 1.

10. Procédé selon la revendication 9, **caractérisé en ce que** les pièces consistent en du métal, une matière plastique, du verre, du bois, du cuir, ou des matières textiles.

11. Systèmes composites obtenus en utilisant les systèmes réactifs selon la revendication 1.
